# EUROPÄISCHE PATENTSCHRIFT

(11) **EP 2 813 166 B1**
(45) Veröffentlichungstag und Bekanntmachung des Hinweises auf die Patenterteilung: **15.07.2015**
(21) Anmeldenummer: 14000530.7
(22) Anmeldetag: 13.02.2014
(51) Int. Cl.: A47J 41/02

(54) **Isoliergefäß und -behälter**
Insulating vessel and container
Pot et récipient isolants

(30) Priorität: 10.06.2013 DE 102013009622
(43) Veröffentlichungstag der Anmeldung: 17.12.2014
(73) Patentinhaber: Emsa GmbH, 48282 Emsdetten (DE)
(72) Erfinder: Wulf, Franz-Jörg, 48282 Emsdetten (DE)
(74) Vertreter: Engelmann, Kristiana

(56) Entgegenhaltungen:
- DE-A1- 19 715 959
- DE-U- 6 942 259
- US-A- 1 473 814

## Beschreibung

Die Erfindung betrifft ein mehrwandiges Isoliergefäß aus Glas, Keramik, Glaskeramik oder dergleichen verhältnismäßig sprödem Material nach dem Oberbegriff des Anspruchs 1 sowie einen ein solches enthaltenden Isolierbehälter nach Anspruch 10.

Die Wandungen des Gefäßes sind miteinander derart verbunden, dass zwischen ihnen zumindest ein Zwischenraum verbleibt, der auf Unterdruck evakuiert wird. Ein derartiges Gefäß und Behälter sind beispielsweise aus der DE 20 2006 004 466 U1 bekannt. Nachteilig bei derartigen Isoliergefäßen ist deren werkstoffbedingte Bruchempfindlichkeit. Die US-PS 1,473,814 zeigt bereits ein Isoliergefäß, dessen äußere Wandung erheblich dicker als die innere Wandung ausgebildet ist und bei dem die äußere Wandung zusätzlich senkrecht und parallel verlaufende Rippen mit nochmals erhöhter Wandstärke aufweist. Im Wesentlichen dient dies der Verbesserung der Griffigkeit, wirkt aber auch verstärkend. Wegen des enormen Materialaufwands für die Außenwandung hat sich dieses Gefäß jedoch nicht durchgesetzt.

Der Erfindung liegt daher die Aufgabe zugrunde, ein gattungsgemäßes Isoliergefäß mit guter Stabilität bei geringem Materialbedarf auszubilden. Diese Aufgabe wird durch ein Isoliergefäß mit den Merkmalen des Anspruchs 1 gelöst. Indem die äußere Wandung des Isoliergefäßes über ihren Umfang verteilt entlang von Linien, die sich an mehreren Punkten berühren, mit Bereichen größerer Wanddicke versehen wird, die sich mit Bereichen geringerer Wanddicke abwechseln, wird eine Stabilisierung des Gefäßes erreicht, ohne dass die Wanddicke insgesamt bzw. vollflächig erhöht werden muss. Durch die erhöhte Stabilität und die somit steiferen Wände können die erfindungsgemäßen Isoliergefäße auch über ein höheres Vakuum stärker evakuiert werden, so dass sich die Isolierleistung ebenfalls verbessert.

Es reicht aus, wenn die Bereiche größerer Wanddicke nicht über das gesamte Gefäß, sondern nur an den zu verstärkenden Teilen angeordnet sind. Die Verteilung der Bereiche größerer Wanddicke über den Umfang der Außenwandung des Gefäßes kann in horizontaler oder vertikaler Richtung vorgesehen sein oder auch in jeder dazu geneigten Richtung bzw. Ebene. Besonders vorteilhaft ist es, wenn sich die Bereiche größerer Wanddicke nicht nur waagerecht oder senkrecht, sondern auch schräg bzw. diagonal, insbesondere netzartig in mehreren Richtungen über die gesamte Außenwandung des Isoliergefäßes erstrecken, da so die Stabilität optimiert wird. Dabei verlaufen die Linien größerer Wanddicke in der Projektion auf einem senkrechten Schnitt durch das Gefäß unter einem bzw. verschiedenen Winkeln ungleich 0° und ungleich 90° zur Senkrechten.

Um den positiven Effekt der erhöhten Bruchleistung bzw. Steifigkeit zu erhalten, sollte die maximale Wanddicke in den Bereichen größerer Wanddicke mindestens das 1,15-fache der minimalen Wanddicke in den Bereichen geringerer Wanddicke aufweisen. Es zeigt sich jedoch auch, dass bei Überschreiten bestimmter Wanddickendifferenzen die Erhöhung der Steifigkeit in keinem sinnvollen Verhältnis mehr zum Materialeinsatz steht, weshalb die maximalen Wanddicken im Bereich der größeren Wanddicken bevorzugt höchstens das 2,5-fache der minimalen Wanddicken in den Bereichen geringerer Wanddicken betragen sollten.

In der erfindungsgemäßen Ausführungsform erstrecken sich die Bereiche größerer Wanddicken entlang von Linien, insbesondere entlang von geraden Linien. So lassen sich auch Gefäße, deren Grundform von der idealen Kugelform abweicht, insbesondere in den sonst anfälligeren Bereichen stabilisieren. Dazu berühren bzw. kreuzen sich die Linien größerer Wanddicke an mehreren Punkten. Insbesondere treffen sich an den Berührpunkten mindestens drei Linien. Sehr gleichmäßige Muster und damit eine stabile Außenkontur lassen sich erzeugen, wenn sich in den Berührpunkten stets vier Linien berühren.

Das erfindungsgemäße Isoliergefäß kann bevorzugt so ausgebildet werden, dass die Außenkontur des Gefäßes bereichsweise abgeflacht ist, insbesondere indem die Linien auf der Außenseite der äußeren Wandung zumindest an Teilen des Gefäßes ebene Flächen zwischen sich einschließen. Hat das Isoliergefäß außenseitig ebene Flächen, verbessert sich auch dessen Handling. Es kann in der Fertigung, im weiteren Einsatz, im Transport und der Verpackung besser gegriffen und z. B. von Verpackungsmaterial umgeben werden und zwar auch in vollautomatischen Verfahren. Dadurch kommt es zu weniger Materialbruch während der Herstellung und in der anschließenden Weiterverarbeitung. Durch die verbesserte Griffigkeit ergeben sich auch Zeitvorteile im Produktions- und Weiterverarbeitungsablauf.

Die sich auf der Außenseite der äußeren Wandung bildenden Flächen müssen jedoch nicht zwingend eben sein. Es ist aber von Vorteil, wenn sie zumindest in Teilen des Isoliergefäßes mehreckig ausgebildet sind, da sich so an jegliche Raumform angenäherte Formen für das Isoliergefäß erzielen lassen.

Besonders gute Festigkeitseffekte und ein besonders ansprechendes Äußeres des Isoliergefäßes lässt sich erreichen, wenn zumindest Teile der Linien ein Polygonmuster bilden, insbesondere ein Facetten- oder Rautenmuster. Dieses kann optisch einem Edelsteinschliff ähneln. Besonders wenn zumindest eine Wandung des Isoliergefäßes reflektierend beschichtet ist - dies geschieht meist durch eine Silberbeschichtung der dem vakuumierten Zwischenraum zugewandten Seiten der Gefäßwände - wird durch die erfindungsgemäßen Wanddickenunterschiede ein optisch faszinierender, edler Effekt erzielt, der sich bei eingesetzten Facettenmustern noch verstärkt.

Die gesamte Außenseite der äußeren Wandung des Isoliergefäßes oder zumindest Teile dessen sind über die Bereiche größerer Wanddicken bevorzugt als Polyeder auszubilden.

Die Erfindung umfasst auch einen Isolierbehälter, der ein vorbeschriebenes Isoliergefäß in einer Außenhülle aufnimmt, beispielsweise als Isolierkanne oder Isolierflasche. Wird diese Außenhülle des Isolierbehälters zumindest teilweise transparent oder transluzent ausgebildet, so dass die Form des Isoliergefäßes erkennbar bleibt, erfährt der gesamte Isolierbehälter eine Wertigkeitserhöhung.

Bei den erfindungsgemäßen Isoliergefäßen, bei denen die Bereiche größerer Wanddicken zwischen sich einzelne Flächen ausbilden, werden die insgesamt wahrgenommenen Flächen kleiner als bei herkömmlichen Isoliergefäßen mit umlaufender Gesamtaußenfläche. Es ergibt sich eine homogene, bessere optische Qualität. Sie wirken dadurch gleichmäßiger, es entstehen weniger Blasen, Einschlüsse oder Schlieren, so dass insgesamt weniger Ausschuss oder Ware produziert wird, die allein aufgrund optischer Kriterien als geringere Qualität einzustufen wäre.

Weitere Vorteile und Einzelheiten ergeben sich aus den Unteransprüchen und in den Zeichnungen darstellten Ausführungsbeispielen, die im Folgenden beschrieben werden; es zeigen:
- Fig. 1: ein erfindungsgemäßes Isoliergefäß in Seitenansicht, zwei Schnitten und einer Detailvergrößerung,
- Fig. 2: einen erfindungsgemäßen Isolierbehälter mit erfindungsgemäßem Isoliergefäß und
- Fig. 3a-3d: weitere Ausführungsformen des Gegenstands aus Fig. 1, jeweils in perspektivischer Ansicht.

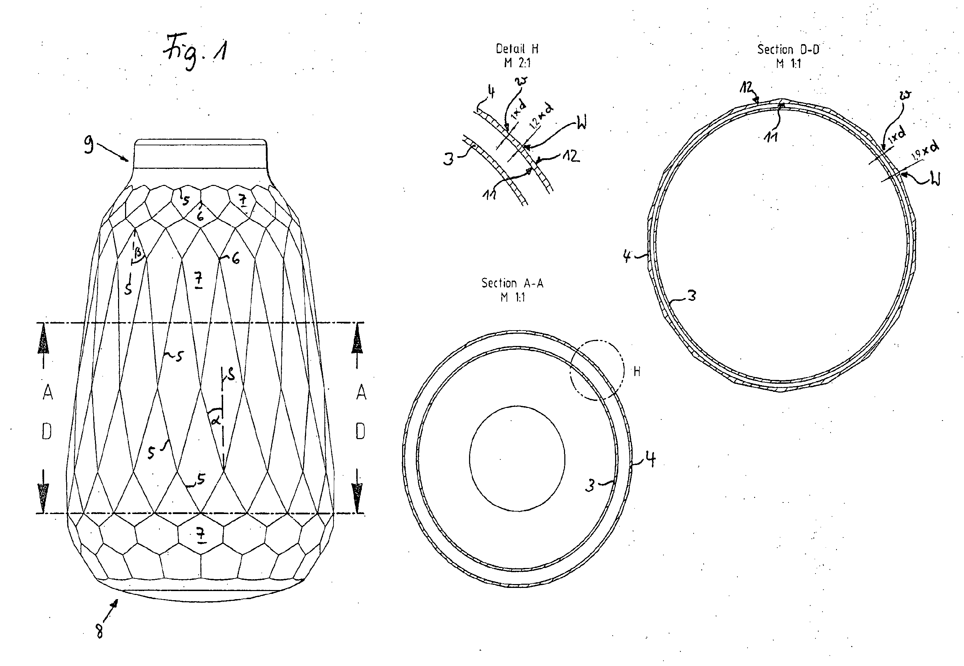

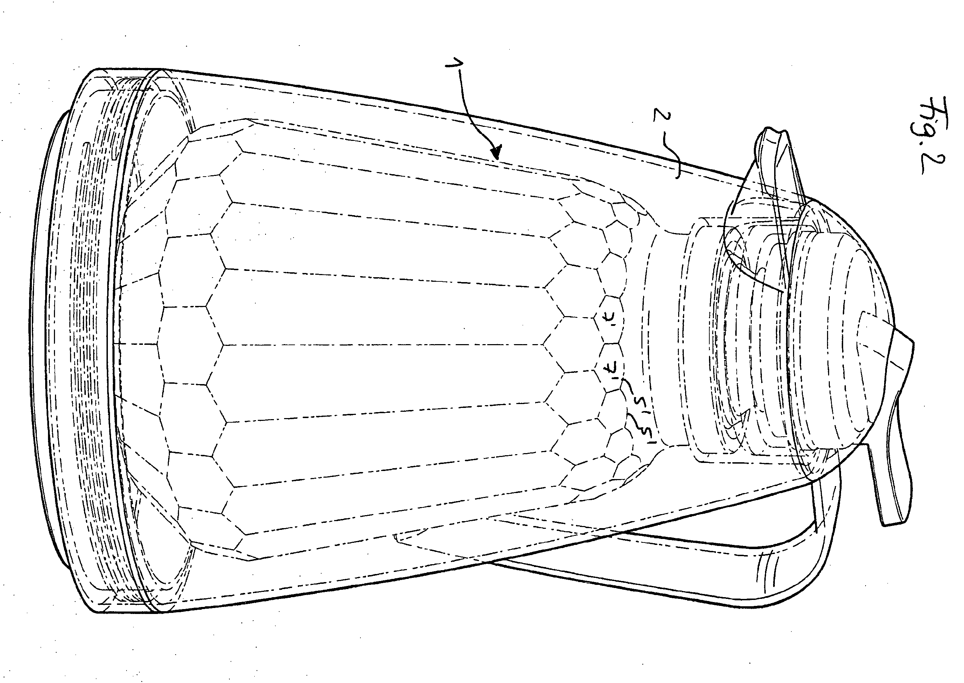

Bei dem in Fig. 1 dargestellten Isoliergefäß handelt es sich um einen so genannten Isolierkolben 1 aus Glas zur Aufnahme in einer wie in Fig. 2 dargestellten Außenhülle 2, wodurch in der Ausführungsform gem. Fig. 2 eine Isolierkanne für warm- oder kaltzuhaltende Getränke gebildet wird. Der Isolierkolben 1 ist dabei in seiner Form der gewünschten Form der Außenhülle 2 anzupassen, um die gewünschte Menge Flüssigkeit aufnehmen zu können.

Der Isolierkolben 1 der dargestellten Ausführungsformen ist wie die Schnitte A-A und D-D der Fig. 1 zeigen doppelwandig ausgebildet. Dabei ist die innere Wandung 3 durchgängig von gleichbleibender Wandstärke, so dass bei Horizontalschnitten durch den Isolierkolben 1 (beispielsweise A-A oder D-D) die Begrenzungen der inneren Wandung 3 jeweils kreisförmig sind. Im Gegensatz dazu weist die äußere Wandung 4 über ihren Umfang bei der dargestellten Ausführungsform bevorzugt gleichmäßig verteilt Bereiche größerer Wanddicke W und sich damit abwechselnde Wandbereiche geringerer Wanddicke w auf. Erfindungsgemäß sind diese entlang von bevorzugt geraden Linien 5 ausgebildet, die sich netzartig über den größten Teil der Außenseite des Isolierkolbens 1 erstrecken und sich an Berührpunkten 6 kreuzen bzw. berühren, je nachdem, wie viele Linien dort zusammen laufen. Dabei schließen die Linien 5 zwischen sich im Wesentlichen ebene Flächen 7 ein die bevorzugt mehreckig, insbesondere viereckig und vorzugsweise rautenförmig sind. Bis auf den Bodenbereich 8 und den Halsbereich 9 des Isolierkolbens ist die Außenseite des Isolierkolbens 1 damit als Polyeder ausgebildet. Im Gegensatz zu dem Polygonmuster des Kolbens 1 aus Fig. 1 weist der in der Außenhülle 2 in Figur 2 aufgenommene Kolben 1 kein Rauten-, sondern ein Wabenmuster auf mit überwiegend sechseckigen Flächen 7 auf. Die oberste Reihe Flächen 7' im Übergang zum Halsbereich 9 ist dabei teilweise nicht eben, sondern gerundet, wobei die oberen Linien 5' nicht gerade, sondern bogenförmig ausgebildet sind.

Die Bereiche größerer Wanddicke W bilden sich erfindungsgemäß entlang der Linien 5 aus, indem die Innenkontur 11 der äußeren Wandung 4 nicht vollständig der Form der Außenseite 12 der äußeren Wandung 4 folgt. Besteht der Isolierkolben 1 aus Glas, lässt sich dieser Effekt bei der Herstellung auf einfache Weise erzielen, indem zunächst die äußere Wandung 4 durch Blasen in eine entsprechend ausgestaltete, beispielsweise facettierte Form gebildet wird. Durch die Zähigkeit des Materials Glas bildet dieses auf der Innenseite 11 nicht exakt die Außenkontur 12 ab, sondern wird größere Radien bilden. Diese führen dann zu den unterschiedlichen Wanddicken w bis W.

Die selektive Materialverstärkung entlang von Linien 5 lässt sich noch weiter erhöhen, wenn beispielsweise in die Außenform, in die die äußere Wandung 4 des Kolbens 1 hinein geblasen wird, entlang der Linien 5 Rillen eingefräst werden, so dass sich dort eine noch größere Materialansammlung bildet. In den Schnitten A-A und D-D der Fig. 1 ist die Innenkontur 11 der äußeren Wandung 4 im Querschnitt idealisiert kreisförmig dargestellt. Eine solche ideale Kreisform ist jedoch in der Praxis nicht erforderlich, da sich auch bei Annäherungen an die Außenkontur 12 die erwünschten unterschiedlichen Wanddicken einstellen. Dies kann ebenso mit anderen Materialien als Glas umgesetzt werden, beispielsweise durch eine Herstellung aus Keramik im Schlickerguss.

Die erfindungsgemäße Verstärkung des Isoliergefäßes 1 ist besonders vorteilhaft und in mehrere Richtungen wirksam, wenn sich die Bereiche größerer Wanddicke W auch diagonal, insbesondere netzartig, über die äußere Wandung 4 erstrecken. Dabei können Spannungen in mehreren Richtungen aufgenommen werden, wenn die Linien 5 sich zumindest auf Teilen des Isolierkolbens 1 derart schräg erstrecken, dass sie in Projektion auf eine Senkrechte S eines Vertikalschnitts einer Winkel von z. B. α oder β größer 0 und kleiner 90 Grad einschließen (siehe Fig. 1 Gesamtansicht).

Die Schnitte in Fig. 1 zeigen ferner, dass die maximale Wanddicke der äußeren Wandung 4 in den Bereichen größerer Wanddicke W durchaus nicht über die gesamte Kontur der äußeren Wandung 4 gleich sein muss. An der Stelle des Schnitts A-A beispielsweise beträgt die maximale Wanddicke entlang der Linien 5 das 1,2-fache der minimalen Wanddicke d (siehe Detail C). Im Schnitt D-D hingegen ergibt sich die maximale Wanddicke an den Berührpunkten 6, wo im Ausführungsbeispiel vier Linien zusammenlaufen, und beträgt dort das 1,9-fache der minimalen Wanddicke d.

Die facettierten bzw. anderweitig mit polygonen Flächen versehenen erfindungsgemäßen Isolierkolben 1 verleihen diesem ein geschliffenes, teilweise sogar brilliantartiges Aussehen, so dass neben der Festigkeitserhöhung auch eine optische Wertigkeitserhöhung erreicht wird. Diese kommt besonders gut zur Geltung in einem Isolierbehälter bei dem wie beispielsweise in Fig. 2 angedeutet, die Außenhülle 2 zumindest bereichsweise transparent ausgebildet ist. Hierfür bieten sich zum Beispiel klare oder farbige aber dennoch transparente Kunststoffe an.

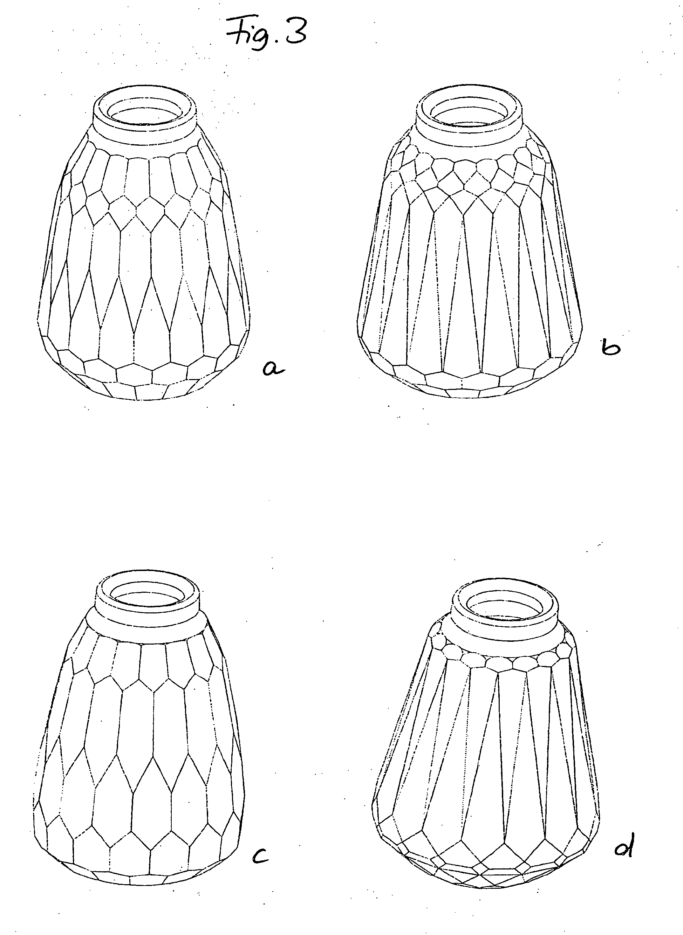

Der erfindungsgemäßen Gestaltungsmöglichkeit der Isoliergefäße 1 sind kaum Grenzen gesetzt. So können je nachdem, welche Bereiche verstärkt werden sollen und welche äußere Raumform erreicht werden soll, unterschiedlichste Gestaltungen und Anordnung der Linien 5 gewählt werden. Figur 3 zeigt dazu nur einige wenige weitere Möglichkeiten außer denen aus Fig. 1 und 2.

## Patentansprüche

1. Mehrwandiges Isoliergefäß aus Glas, Keramik, Glaskeramik oder dgl., dessen Wandungen (3, 4) miteinander derart verbunden sind, dass sie zwischen sich zumindest einen Zwischenraum einschließen, der auf einen Unterdruck evakuiert ist, wobei die äußere Wandung (4) über ihren Umfang angeordnete Bereiche größerer Wanddicke (W) aufweist, die sich mit Bereichen geringerer Wanddicke (w) abwechseln, **dadurch gekennzeichnet, dass** die Bereiche größerer Wanddicke (W) entlang von Linien (5) ausgebildet sind, die sich an mehreren Punkten (6) berühren.

2. Isoliergefäß nach Anspruch 1, **dadurch gekennzeichnet, dass** die maximale Wanddicke in den Bereichen größerer Wanddicke (W) mindestens dem 1,15-fachen der minimalen Wanddicke in den Bereichen geringerer Wanddicke (w) entspricht.

3. Isoliergefäß nach Anspruch 1 oder 2, **dadurch gekennzeichnet, dass** die maximale Wanddicke in den Bereichen größerer Wanddicke (W) höchstens dem 2,5-fachen der minimalen Wanddicke in den Bereichen geringerer Wanddicke (w) entspricht.

4. Isoliergefäß nach einem der Ansprüche 1 bis 3, **dadurch gekennzeichnet, dass** sich an den Berührpunkten (6) mindestens drei Linien (5) berühren.

5. Isoliergefäß nach einem der Ansprüche 1 bis 4, **dadurch gekennzeichnet, dass** die Linien (5) auf der Außenseite (12) der äußeren Wandung (4) zumindest teilweise ebene Flächen (7) zwischen sich einschließen.

6. Isoliergefäß nach einem der Ansprüche 1 bis 5, **dadurch gekennzeichnet, dass** die Linien (5) auf der Außenseite (12) der äußeren Wandung (4) zumindest teilweise mehreckige Flächen (7) zwischen sich einschließen.

7. Isoliergefäß nach einem der Ansprüche 1 bis 6, **dadurch gekennzeichnet, dass** zumindest Teile der Linien (5) in Projektion auf einen Vertikalschnitt durch das Gefäß zur Senkrechten (S) unter einem Winkel (α, β) größer Null und kleiner 90° verlaufen.

8. Isoliergefäß nach einem der Ansprüche 1 bis 7, **dadurch gekennzeichnet, dass** zumindest Teile der Linien (5) ein Polygonmuster, insbesondere ein Facetten- bzw. Rautenmuster ergeben.

9. Isoliergefäß nach einem der Ansprüche 1 bis 8, **dadurch gekennzeichnet, dass** die Außenseite (12) der äußeren Wandung (4) zumindest bereichsweise als Polyeder ausgebildet ist.

10. Isolierbehälter mit einem in einer Außenhülle (2) aufgenommenen Isoliergefäß (1), **dadurch gekennzeichnet, dass** das Isoliergefäß (1) nach einem der vorstehenden Ansprüche ausgebildet ist.

11. Isolierbehälter nach Anspruch 10, **dadurch gekennzeichnet, dass** die Außenhülle (2) zumindest teilweise transparent ausgebildet ist.

## Claims

1. Multi-walled insulating vessel made of glass, ceramic, glass ceramics or the like, the walls (3, 4) of which are interconnected in such a way that they enclose between them at least one intermediate space which is evacuated under a vacuum, the outer wall (4) having regions of greater wall thickness (W) arranged across the circumference thereof, which regions alternate with regions of lower wall thickness (w), **characterised in that** the regions of greater wall thickness (W) are formed along lines (5) which meet at a plurality of points (6).

2. Insulating vessel according to claim 1, **characterised in that** the maximum wall thickness in the regions of greater wall thickness (W) corresponds to at least 1.15 times the minimum wall thickness in the regions of lower wall thickness (w).

3. Insulating vessel according to either claim 1 or claim 2, **characterised in that** the maximum wall thickness in the regions of greater wall thickness (W) corresponds to at most 2.5 times the minimum wall thickness in the regions of lower wall thickness (w).

4. Insulating vessel according to any of claims 1 to 3, **characterised in that** at least three lines (5) meet at the meeting points (6).

5. Insulating vessel according to any of claims 1 to 4, **characterised in that** the lines (5) on the outside (12) of the outer wall (4) enclose between them faces (7) which are planar at least in part.

6. Insulating vessel according to any of claims 1 to 5, **characterised in that** the lines (5) on the outside (12) of the outer wall (4) enclose between them faces (7) which are polygonal at least in part.

7. Insulating vessel according to any of claims 1 to 6, **characterised in that** at least some of the lines (5) extend to the vertical (S) at an angle (α, β) greater than zero and smaller than 90°, projected on a vertical section through the vessel.

8. Insulating vessel according to any of claims 1 to 7, **characterised in that** at least some of the lines (5) form a polygonal design, in particular a faceted or rhombus design.

9. Insulating vessel according to any of claims 1 to 8, **characterised in that** the outside (12) of the outer wall (4) is formed so as to be polyhedral, at least in regions.

10. Insulating container comprising an insulating vessel (1) accommodated in an external casing (2), **characterised in that** the insulating vessel (1) is formed according to any of the preceding claims.

11. Insulating container according to claim 10, **characterised in that** the external casing (2) is formed so as to be transparent, at least in part.

## Revendications

1. Pot isolant à plusieurs parois en verre, en céramique, en vitrocéramique ou similaire, dont les parois (3, 4) sont reliées les unes aux autres de telle sorte qu'elles forment au moins un espace intermédiaire entre elles qui est évacué sur une dépression, la paroi extérieure (4) présentant des zones disposées sur sa périphérie qui ont une épaisseur de paroi plus importante (W) qui alternent avec des zones d'épaisseur de paroi moins importante (w),
**caractérisé en ce que** les zones d'épaisseur de paroi plus importante (W) sont réalisées le long de lignes (5) qui se touchent en plusieurs points (6).

2. Pot isolant selon la revendication 1, **caractérisé en ce que** l'épaisseur de paroi maximale dans les zones d'épaisseur de paroi plus importante (W) correspond au moins à 1,15 fois l'épaisseur de paroi minimale dans les zones d'épaisseur de paroi moins importante (w).

3. Pot isolant selon la revendication 1 ou 2, **caractérisé en ce que** l'épaisseur de paroi maximale dans les zones d'épaisseur de paroi plus importante (W) correspond au plus à 2,5 fois l'épaisseur de paroi minimale dans les zones d'épaisseur de paroi moins importante (w).

4. Pot isolant selon une des revendications 1 à 3, **caractérisé en ce qu'**au moins trois lignes (5) se touchent sur les points de contact (6).

5. Pot isolant selon une des revendications 1 à 4, **caractérisé en ce que** les lignes (5) forment, sur la face extérieure (12) de la paroi extérieure (4), des surfaces au moins partiellement planes (7) entre elles.

6. Pot isolant selon une des revendications 1 à 5, **caractérisé en ce que** les lignes (5) forment, sur la face extérieure (12) de la paroi extérieure (4), des surfaces au moins partiellement pluriangulaires (7) entre elles.

7. Pot isolant selon une des revendications 1 à 6, **caractérisé en ce qu'**au moins des parties des lignes (5) s'étendent en projection sur une coupe verticale à travers le pot par rapport à la verticale (S) selon un angle (α,β) supérieur à zéro et inférieur à 90°.

8. Pot isolant selon une des revendications 1 à 7, **caractérisé en ce qu'**au moins des parties des lignes (5) forment un modèle de polygone, en particulier un modèle de facette, respectivement de losange.

9. Pot isolant selon une des revendications 1 à 8, **caractérisé en ce que** la face extérieure (12) de la paroi extérieure (4) est réalisée au moins par endroits sous la forme d'un polyèdre.

10. Récipient isolant comprenant un pot isolant reçu dans une enveloppe extérieure (2), **caractérisé en ce que** le pot isolant (1) est réalisé selon une des revendications précédentes.

11. Récipient isolant selon la revendication 10, **caractérisé en ce que** l'enveloppe extérieure (2) est réalisée au moins partiellement transparente.
